# EUROPEAN PATENT SPECIFICATION

(11) **EP 2 888 543 B1**
(45) Date of publication and mention of the grant of the patent: **20.01.2021**
(21) Application number: 13756241.9
(22) Date of filing: 21.08.2013
(51) Int. Cl.: F25B 49/02

(54) **STAGE TRANSITION IN TRANSCRITICAL REFRIGERANT VAPOR COMPRESSION SYSTEM**
ÜBERGANG IN EINEM TRANSKRITISCHEN KÄLTEMITTELDAMPFKOMPRESSIONSSYSTEM
TRANSITION D'ÉTAGES DANS UN SYSTÈME DE COMPRESSION DE VAPEUR DE RÉFRIGÉRANT TRANSCRITIQUE

(30) Priority: 24.08.2012 US 201261692837 P
(43) Date of publication of application: 01.07.2015
(73) Proprietor: Carrier Corporation, Farmington, CT 06034 (US)
(72) Inventor: SUN, Jian, Syracuse, New York 13321 (US); SHAPIRO, Aryn, Syracuse, New York 13321 (US); LIU, Lucy Yi, Syracuse, New York 13321 (US); GAN, Mingfei, Syracuse, New York 13321 (US)
(74) Representative: Schmitt-Nilson Schraud Waibel Wohlfrom Patentanwälte Partnerschaft mbB
(86) International application number: PCT/US2013/055904
(87) International publication number: WO 2014/031708

(56) References cited:
- WO-A1-2008/143608
- WO-A1-2009/061804
- WO-A2-2011/049767

## Description

### Background of the Disclosure

This disclosure relates generally to refrigerant vapor compression systems and, more particularly, to improving the energy efficiency and/or low cooling capacity operation of a transcritical refrigerant vapor compression system.

Refrigerant vapor compression systems used in connection with transport refrigeration systems are generally subject to more stringent operating conditions due to the wide range of operating load conditions and the wide range of outdoor ambient conditions over which the refrigerant vapor compression system must operate to maintain product within the cargo space at a desired temperature. The desired temperature at which the cargo needs to be controlled can also vary over a wide range depending on the nature of cargo to be preserved. The refrigerant vapor compression system must not only have sufficient capacity to rapidly pull down the temperature of product loaded into the cargo space at ambient temperature, but also should operate energy efficiently over the entire load range, including at low cooling capacity when maintaining a stable product temperature during transport.

During temperature maintenance, the object is to maintain the temperature within the temperature controlled space, e.g. the cargo box, within a narrow temperature band bounding a control temperature set point. If the refrigerant vapor compression system outputs too much cooling capacity, the temperature within the temperature controlled space will drop below the narrow temperature. Conversely, if the refrigerant vapor compression system outputs too little cooling capacity, the temperature within the temperature controlled space will rise above the narrow temperature band. In conventional practice, it is common to cycle the refrigerant compressor on and off during low capacity operation. However, doing so can result in undesirable repeated overshoot and undershoot of the narrow temperature band bounding the control temperature set point.

### Summary of the Disclosure

Operation of a transcritical refrigerant vapor compression system for supplying temperature conditioned air to a temperature controlled space is controlled when staging up or staging down to avoid undesirable overshoot and undershoot of the narrow temperature band bounding the control temperature set point for the temperature within the temperature controlled space.

WO 2008/143608 A1 discloses a control for operating a refrigerant system of the type having a motor-driven compressor which is subject to variable load conditions, an identification mechanism identifying a con dition indicative of an excessive compressor load when operating the compressor in a first loaded mode; and an unloading mechanism for responsively reducing the compressor load to prevent compressor shutdown.

WO 2011/049767 A2 describes a method for protecting a refrigerant vapor compression system during a standstill period following shutdown of the refrigerant vapor compression system; a method for detecting a low refrigerant charge level in a refrigerant vapor compression system operating in a transcritical mode; and a refrigerant vapor compression system that includes a controller operative to perform a refrigerant charge detection method.

In WO 2009/061804 A1 a refrigeration system for a transport refrigeration unit and a method of operating the refrigeration system for cooling a temperature controlled cargo space are disclosed. The refrigeration system includes a primary refrigerant circuit including a refrigerant compression device, a motor for driving the compression device; a variable speed drive for varying the speed of operation of the compression device; and a controller operatively associated with the variable speed drive and the compression device. The controller controls the cooling capacity of the refrigeration system by selectively controlling the speed of said compression device in a first continuous run mode of operation and by selectively powering on and powering off said compression device in a first cycling mode of operation.

According to the invention, a method for operation of a transcritical refrigerant vapor compression system for supplying conditioned air to a temperature controlled space includes operating the refrigerant vapor compression system in a transition mode when staging up or staging down between a higher capacity mode and a lower capacity mode. Operation in a transition mode includes monitoring a first parameter and a second parameter, and staging out of the transition mode in response to a determination that at least one of a first condition related to the first parameter and a second condition related to the second parameter has been established or has been established for a particular period of time. According to the invention, operation in the transition mode includes: monitoring a temperature control differential, TSETPT - TCRTL, between a control temperature set point, TSETPT, and a sensed control temperature, TCRTL; and establishing a trend in a change of the temperature control differential over an elapsed time, which includes calculating an average derivative of the temperature control differential over the elapsed time.

In an embodiment, the method includes: entering a stage down transition mode for staging down from operation in a high capacity mode to operation in one of a first low capacity mode and a second lower capacity mode; determining whether the average derivative of the temperature control differential has been positive for an elapsed time greater than a preset first period of time; and if the average derivative of the temperature control differential has been positive for an elapsed time greater than the preset first period of time, staging down to the second lower capacity mode and bypassing the first low capacity mode. In this embodiment, the method further includes: if the average derivative of the temperature control differential has not been positive for an elapsed time greater than the preset first period of time, determining whether the temperature control differential is currently less than zero; and if the temperature control differential is currently less than zero, staging down to the first low capacity mode. In this embodiment, the method further includes: if the temperature control differential is not currently less than zero, determining whether the temperature control differential has been greater than zero for a preset second period of time; and if the temperature control differential has been greater than zero for the second preset period of time, staging down to the second lower capacity mode and bypassing the first low capacity mode.

In an embodiment, the method includes: entering a stage up transition mode for staging up from operation in a low capacity mode to operation in one of a first high capacity mode and a second higher capacity mode; determining whether the average derivative of the temperature control differential has been negative for an elapsed time greater than a preset third period of time; and if the average derivative of the temperature control differential has been negative for an elapsed time greater than the preset third period of time, staging up to the second higher capacity mode and bypassing the first high capacity mode. In this embodiment the method further includes: if the average derivative of the temperature control differential has not been negative for an elapsed time greater than the preset third period of time, determining whether the temperature control differential is currently greater than zero; and if the temperature control differential is currently greater than zero, staging up to the first high capacity mode. In this embodiment, the method may further include: if the temperature control differential is not currently greater than zero, determining whether the temperature control differential has been less than zero for a preset fourth period of time; and if the temperature control differential has been less than zero for the fourth preset period of time, staging up to the second higher capacity mode and bypassing the first high capacity mode.

According to the invention, a refrigerant vapor compression system includes: a compression device for compressing a refrigerant vapor from a suction pressure to a discharge pressure, a refrigerant heat rejection heat exchanger and a refrigerant heat absorption heat exchanger arranged in serial refrigerant flow relationship in a transcritical cycle closed-loop primary refrigerant circuit, the refrigerant heat rejection heat exchanger functioning as a refrigerant gas cooler and the refrigerant heat absorption heat exchanger functioning as a refrigerant evaporator; and a controller operatively associated with the refrigerant vapor compression system, the controller configured to control operation of the refrigerant vapor compression system in a transition mode when staging up or staging down between a higher capacity mode and a lower capacity mode, the controller further configured to monitor a temperature control differential, TSETPT - TCRTL, between a control temperature set point, TSETPT, and a sensed control temperature, TCRTL, during operation in the transition mode; and to calculate an average derivative of the temperature control differential over an elapsed time during operation in the transition mode.

According to the invention, the controller is further configured to: enter a stage down transition mode when staging down from operation in a high capacity mode to operation in one of a first low capacity mode and a second lower capacity mode; determine whether the average derivative of the temperature control differential has been positive for an elapsed time greater than a preset first period of time; and if the average derivative of the temperature control differential has been positive for an elapsed time greater than the preset first period of time, stage down to the second lower capacity mode and bypassing the first low capacity mode. According to the invention, the controller is further configured to: if the average derivative of the temperature control differential has not been positive for an elapsed time greater than the preset first period of time, determine whether the temperature control differential is currently less than zero; and if the temperature control differential is currently less than zero, stage down to the first low capacity mode. The controller may be further configured to: if the temperature control differential is not currently less than zero, determine whether the temperature control differential has been greater than zero for a preset second period of time; and if the temperature control differential has been greater than zero for the second preset period of time, stage down to the second lower capacity mode and bypassing the first low capacity mode.

In an embodiment, the controller is further configured to: enter a stage up transition mode for staging up from operation in a low capacity mode to operation in one of a first high capacity mode and a second higher capacity mode; determine whether the average derivative of the temperature control differential has been negative for an elapsed time greater than a preset third period of time; and if the average derivative of the temperature control differential has been negative for an elapsed time greater than the preset third period of time, stage up to the second higher capacity mode and bypassing the first high capacity mode. The controller may be further configured to: if the average derivative of the temperature control differential has not been negative for an elapsed time greater than the preset third period of time, determine whether the temperature control differential is currently greater than zero; and if the temperature control differential is currently greater than zero, stage up to the first high capacity mode. The controller may be further configured to: if the temperature control differential is not currently greater than zero, determine whether the temperature control differential has been less than zero for a preset fourth period of time; and if the temperature control differential has been less than zero for the fourth preset period of time, stage up to the second higher capacity mode and bypassing the first high capacity mode.

In an aspect, a method is provided for controlling low capacity operation of a transcritical refrigerant vapor compression system for supplying conditioned air to a temperature controlled space, the refrigerant vapor compression system having a primary refrigerant flow circuit including a variable speed compressor driven by a variable frequency motor, a refrigerant gas cooler, a high pressure expansion device, a flash tank, an evaporator expansion device, and an evaporator disposed in serial refrigerant flow arrangement in the primary refrigerant flow circuit and a compressor unload circuit including an unload valve selectively positionable to open or close the compressor unload circuit. The method includes: opening the unload valve to allow refrigerant to pass from the compressor through the compressor unload circuit to a suction pressure portion of the primary refrigerant flow circuit; opening the high pressure expansion valve to a full open position; operating the compressor drive motor at a minimum frequency to drive the compressor at a minimum speed; and selectively cycling an air moving device associated with the gas cooler through an on/off duty cycle.

In an aspect, a method is provided for controlling low capacity operation of a transcritical vapor compression system for supplying conditioned air to a temperature controlled space includes controlling operation of at least one of an air moving device associated with the gas cooler or a heating device associated with the evaporator for heating a flow of air drawn from the temperature controlled space. In an embodiment of the method, the air moving device associated with the gas cooler or the heating device associated with the evaporator is controlled in such a way as to preserve the temperature control sensitivity of the variable speed drive driving the variable speed motor driving the compression device.

### Brief Description of the Drawings

For a further understanding of the disclosure, reference will be made to the following detailed description which is to be read in connection with the accompanying drawing, wherein:
FIG. 1 is perspective view of a refrigerated container equipped with a transport refrigeration unit;
FIG. 2 is a schematic illustration of an embodiment of the refrigerant vapor compression system of the transport refrigeration unit in accord with an aspect of the invention;
FIG. 3 is a block diagram process flow chart illustrating staging down and staging up a refrigerant vapor compression system in accordance with an embodiment of the method disclosed herein;
FIG. 4 is a block diagram process flow chart illustrating an exemplary logic for staging down a refrigerant vapor compression system from an economized mode to an unloaded mode in accordance with an embodiment of the method disclosed herein.

### Detailed Description of the Invention

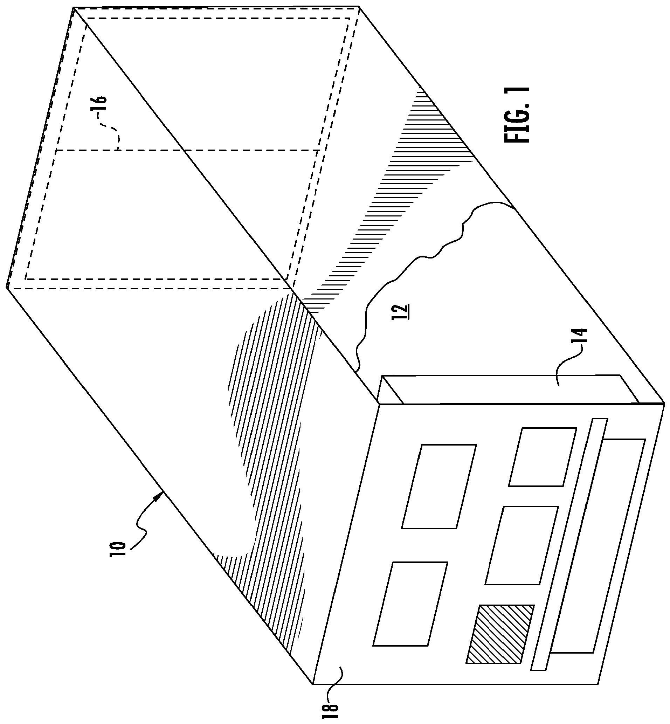

There is depicted in FIG. 1 an exemplary embodiment of a refrigerated container 10 having a temperature controlled cargo space 12 the atmosphere of which is refrigerated by operation of a transport refrigeration unit 14 associated with the cargo space 12. In the depicted embodiment of the refrigerated container 10, the transport refrigeration unit 14 is mounted in a wall of the refrigerated container 10, typically in the front wall 18 in conventional practice. However, the refrigeration unit 14 may be mounted in the roof, floor or other walls of the refrigerated container 10. Additionally, the refrigerated container 10 has at least one access door 16 through which perishable goods, such as, for example, fresh or frozen food products, may be loaded into and removed from the cargo space 12 of the refrigerated container 10.

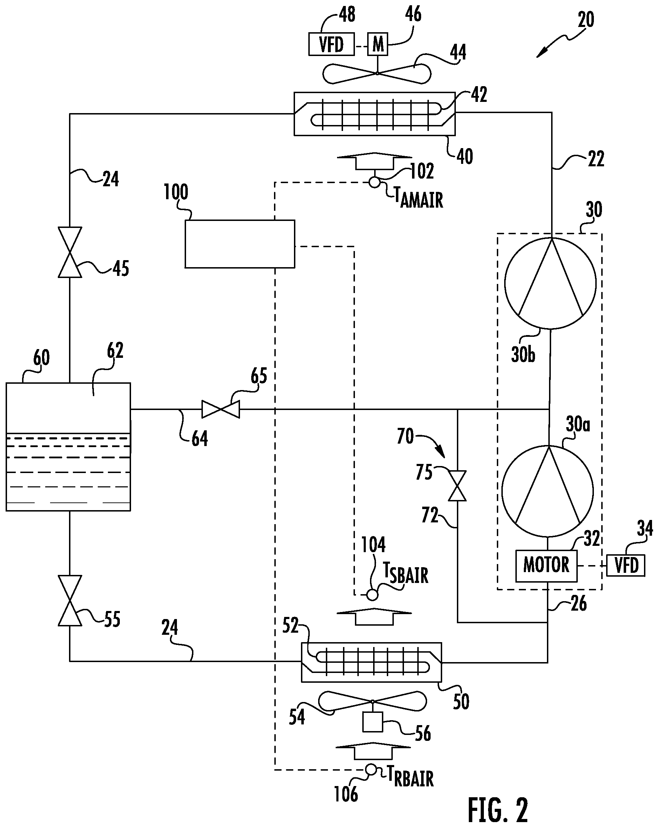

Referring now to FIG. 2, there is depicted schematically an embodiment of a refrigerant vapor compression system 20 suitable for use in the transport refrigeration unit 14 for refrigerating air drawn from and supplied back to the temperature controlled cargo space 12. Although the refrigerant vapor compression system 20 will be described herein in connection with a refrigerated container 10 of the type commonly used for transporting perishable goods by ship, by rail, by land or intermodally, it is to be understood that the refrigerant vapor compression system 20 may also be used in transport refrigeration units for refrigerating the cargo space of a truck, a trailer or the like for transporting perishable fresh or frozen goods. The refrigerant vapor compression system 20 is also suitable for use in conditioning air to be supplied to a climate controlled comfort zone within a residence, office building, hospital, school, restaurant or other facility. The refrigerant vapor compression system 20 could also be employed in refrigerating air supplied to display cases, merchandisers, freezer cabinets, cold rooms or other perishable and frozen product storage areas in commercial establishments.

The refrigerant vapor compression system 20 includes a multi-stage compression device 30, a refrigerant heat rejection heat exchanger 40, a flash tank 60, and a refrigerant heat absorption heat exchanger 50, also referred to herein as an evaporator, with refrigerant lines 22, 24 and 26 connecting the aforementioned components in serial refrigerant flow order in a primary refrigerant circuit. A high pressure expansion device (HPXV) 45, such as for example an electronic expansion valve, is disposed in the refrigerant line 24 upstream of the flash tank 60 and downstream of refrigerant heat rejection heat exchanger 40. An evaporator expansion device (EVXV) 55, such as for example an electronic expansion valve, operatively associated with the evaporator 50, is disposed in the refrigerant line 24 downstream of the flash tank 60 and upstream of the evaporator 50.

The compression device 30 compresses the refrigerant and circulates the refrigerant through the primary refrigerant circuit as will be discussed in further detail hereinafter. The compression device 30 may comprise a single, multiple-stage refrigerant compressor, for example a reciprocating compressor or a scroll compressor, having a first compression stage 30a and a second stage 30b, wherein the refrigerant discharging from the first compression stage 30a passes to the second compression stage 30b for further compression. Alternatively, the compression device 30 may comprise a pair of individual compressors, one of which constitutes the first compression stage 30a and other of which constitutes the second compression stage 30b, connected in series refrigerant flow relationship in the primary refrigerant circuit via a refrigerant line connecting the discharge outlet port of the compressor constituting the first compression stage 30a in refrigerant flow communication with the suction inlet port of the compressor constituting the second compression stage 30b for further compression. In a two compressor embodiment, the compressors may be scroll compressors, screw compressors, reciprocating compressors, rotary compressors or any other type of compressor or a combination of any such compressors. In both embodiments, in the first compression stage 30a, the refrigerant vapor is compressed from a lower pressure to an intermediate pressure and in the second compression stage 30b, the refrigerant vapor is compressed from an intermediate pressure to higher pressure.

In the embodiment of the refrigerant vapor compression system 20 depicted in FIG. 2, the compression device 30 is driven by a variable speed compressor motor 32 powered by electric current delivered through a variable frequency drive 34. The electric current may be supplied to the variable speed drive 34 from an external power source (not shown), such as for example a ship board power plant, or from a fuel-powered engine drawn generator unit, such as a diesel engine driven generator set, attached to the front of the container. The speed of the variable speed compressor 30 may be varied by varying the frequency of the current output by the variable frequency drive 34 to the compressor drive motor 32. It is to be understood, however, that the compression device 30 could in other embodiments comprise a fixed speed compressor.

The refrigerant heat rejection heat exchanger 40 may comprise a finned tube heat exchanger 42 through which hot, high pressure refrigerant discharged from the second compression stage 30b (i.e. the final compression charge) passes in heat exchange relationship with a secondary fluid, most commonly ambient air drawn through the heat exchanger 42 by the fan(s) 44. The finned tube heat exchanger 42 may comprise, for example, a fin and round tube heat exchange coil or a fin and flat mini-channel tube heat exchanger. In the depicted embodiment, a variable speed fan motor 46 powered by a variable frequency drive drives the fan(s) 44 associated with the heat rejection heat exchanger 40. The variable speed fan motor 46 may be powered by the same variable frequency drive 34 that powers the compressor motor or by a separate dedicated variable frequency drive 48, as depicted in FIG. 2.

When the refrigerant vapor compression system 20 operates in a transcritical cycle, the pressure of the refrigerant discharging from the second compression stage 30b and passing through the refrigerant heat rejection heat exchanger 40, referred to herein as the high side pressure, exceeds the critical point of the refrigerant, and the refrigerant heat rejection heat exchanger 40 functions as a gas cooler. However, it should be understood that if the refrigerant vapor compression system 20 operates solely in the subcritical cycle, the pressure of the refrigerant discharging from the compressor and passing through the refrigerant heat rejection heat exchanger 40 is below the critical point of the refrigerant, and the refrigerant heat rejection heat exchanger 40 functions as a condenser. As the method of operation disclosed herein pertains to operation of the refrigerant vapor compression system 20 in a transcritical cycle, the refrigerant heat rejection heat exchanger will also be referred to herein as gas cooler 40.

The refrigerant heat absorption heat exchanger 50 may also comprise a finned tube coil heat exchanger 52, such as a fin and round tube heat exchanger or a fin and flat, micro-channel or mini-channel tube heat exchanger. Whether the refrigerant vapor compression system is operating in a transcritical cycle or a subcritical cycle, the refrigerant heat absorption heat exchanger 50 functions as a refrigerant evaporator. Before entering the evaporator 50, the refrigerant passing through refrigerant line 24 traverses the evaporator expansion device 55, such as, for example, an electronic expansion valve or a thermostatic expansion valve, and expands to a lower pressure and a lower temperature to enter heat exchanger 52. As the refrigerant traverses the heat exchanger 52, the refrigerant, typically a two-phase (liquid/vapor mix) refrigerant, passes in heat exchange relationship with a heating fluid whereby the liquid refrigerant is evaporated to a vapor and the vapor typically superheated to a desired degree. The low pressure vapor refrigerant leaving the heat exchanger 52 passes through the refrigerant line 26 to the suction inlet of the first compression stage 30a. The heating fluid may be air drawn by an associated fan(s) 54 from a climate controlled environment, such as a perishable/frozen cargo storage zone associated with a transport refrigeration unit, or a food display or storage area of a commercial establishment, or a building comfort zone associated with an air conditioning system, to be cooled, and generally also dehumidified, and thence returned to a climate controlled environment.

The flash tank 60, which is disposed in the refrigerant line 24 between the gas cooler 40 and the evaporator 50, upstream of the evaporator expansion valve 55 and downstream of the high pressure expansion device 45, functions as an economizer and a receiver. The flash tank 60 defines a chamber 62 into which expanded refrigerant having traversed the high pressure expansion device 45 enters and separates into a liquid refrigerant portion and a vapor refrigerant portion. The liquid refrigerant collects in the chamber 62 and is metered therefrom through the downstream leg of the refrigerant line 24 by the evaporator expansion device 55 to flow through the evaporator 50.

The vapor refrigerant collects in the chamber 62 above the liquid refrigerant and may pass therefrom through economizer vapor line 64 for injection of refrigerant vapor into an intermediate stage of the compression process. An economizer flow control device 65, such as, for example, a solenoid valve (ESV) having an open position and a closed position, is interposed in the economizer vapor line 64. When the refrigerant vapor compression system 20 is operating in a economized mode, the economizer flow control device, ESV, 65 is opened thereby allowing refrigerant vapor to pass through the economizer vapor line 64 from the flash tank 60 into an intermediate stage of the compression process. When the refrigerant vapor compression system 20 is operating in a standard, non-economized mode, the economizer flow control device, ESV, 65 is closed thereby preventing refrigerant vapor to pass through the economizer vapor line 64 from the flash tank 60 into an intermediate stage of the compression process.

In an embodiment where the compression device 30 has two compressors connected in serial flow relationship by a refrigerant line, one being a first compression stage 30a and the other being a second compression stage 30b, the vapor injection line 64 communicates with the refrigerant line interconnecting the outlet of the first compression stage 30a to the inlet of the second compression stage 30b. In an embodiment where the compression device 30 comprises a single compressor having a first compression stage 30a feeding a second compression stage 30b, the refrigerant vapor injection line 64 can open directly into an intermediate stage of the compression process through a dedicated port opening into the compression chamber.

The refrigerant vapor compression system 20 also includes a controller 100 operatively associated with the plurality of flow control devices 45, 55, 65 and 75 interdisposed in various refrigerant lines as previously described for selectively controlling the opening, the closing, and, as applicable, the openness. The controller 100 also monitors the ambient air temperature, T_{AMAIR}, supply air temperature, T_{SBAIR}, and return air temperature, T_{RBAIR}. In the embodiment of the refrigerant vapor compression system 20 depicted in FIG. 2, a temperature sensor 102 may be provided for sensing the ambient air temperature and transmitting a signal indicative of the ambient air temperature to the controller 100. In an embodiment, the ambient air temperature air sensor 102 may be disposed to sense the temperature of the ambient air being delivered to the refrigerant heat rejection heat exchanger 40 upstream of the heat exchanger coil 42. A temperature sensor 104 is disposed in association with the evaporator 50 for sensing the temperature of the supply air having traversed the evaporator heat exchange coil 52 and passing back to the temperature controlled space 12 and for transmitting a signal indicative of the supply air temperature, T_{SBAIR}, to the controller 100. A temperature sensor 106 is disposed in association with the evaporator 50 for sensing the temperature of the return air being drawn from the temperature controlled space 12 to pass over the evaporator heat exchange coil 52 and for transmitting a signal indicative of the return air temperature, T_{RBAIR}, to the controller 100. The temperature sensors 102, 104 and 106 may be conventional temperature sensors, such as for example, thermometers, thermocouples or thermistors. The controller 100 may also monitor various pressures and temperatures and operating parameters by various sensors operatively associated with the controller 100 and disposed at selected locations throughout the refrigerant vapor compression system 20.

The term "controller" as used herein refers to any method or system for controlling and should be understood to encompass microprocessors, microcontrollers, programmed digital signal processors, integrated circuits, computer hardware, computer software, electrical circuits, application specific integrated circuits, programmable logic devices, programmable gate arrays, programmable array logic, personal computers, chips, and any other combination of discrete analog, digital, or programmable components, or other devices capable of providing processing functions.

The controller 100 is configured to control operation of the refrigerant vapor compression system in various operational modes, including several capacity modes and an unloaded mode. A capacity mode is a system operating mode wherein a refrigeration load is imposed on the system requiring the compressor to run in a loaded condition to meet the cooling demand. In an unloaded mode, the refrigeration load imposed upon the system is so low that sufficient cooling capacity may be generated to meet the cooling demand with the compressor running in an unloaded condition. The controller 100 is also configured to control the variable speed drive 34 to vary the frequency of electric current delivered to the compressor drive motor so as to vary the speed of the compression device 30 to vary the capacity output of the compression device in response to cooling demand.

As noted previously, in transport refrigeration applications, the refrigerant vapor compression system 20 must be capable of operating at high capacity to rapidly pull-down the temperature within the cargo box upon loading and must be capable of operating at extremely low capacity during maintenance of the box temperature within a very narrow band, such as for example as little as +/- 0.25°C (+/-0.45°F), during transport. Depending upon the particular cargo being shipped, the required box air temperature may range from as low as -34.4°C (-30°F) up to 30°C (86°F). Thus, the controller 100 will selectively operate the refrigerant vapor compression system in a loaded mode (high refrigeration capacity mode) in response to a high cooling demand, such as during initial pull-down and recovery pull downs, in a standard economized mode or a standard non-economized mode.

Once the box air temperature has been pulled down, that is reduced, to a temperature within a narrow band around a set point box temperature, the controller 100 will also selectively operate the refrigerant vapor compression system 20 in an unload mode (low refrigeration capacity mode) when maintaining the box temperature in the narrow band around a set point box temperature. The narrow temperature band has an upper temperature equal to the control temperature set point, TSETPT, plus an upper bound temperature differential, ΔTUPPER, and a lower bound temperature differential, ΔTLOWER. Typically, the box temperature is controlled indirectly through monitoring and set point control of either one of the temperature, T_{SBAIR}, of the supply box air, i.e. the air leaving the evaporator 50, and the temperature, T_{RBAIR}, of the return box air, i.e. the box air entering the evaporator 50.

In response to the cooling load imposed on the refrigerant vapor compression system 20, the controller 100 is configured to selectively operate the refrigerant vapor compression in one of following operating modes: at least one high capacity economized mode, a moderate capacity non-economized standard mode, and a low/minimum capacity unloaded mode. In the depicted refrigerant vapor compression system 20, wherein the gas cooler fan 44 is driven by a multiple speed or variable speed motor 46, the economized capacity mode includes a maximum capacity economized mode, as well as a high capacity economized mode. In the maximum capacity economized mode, also referred to herein as stage 0, the economizer solenoid valve 65 is open, the unload solenoid valve 75 is closed and the gas cooler fan 44 is operated at a high speed. In the high capacity economized mode, also referred to herein as stage 1, the economizer solenoid valve 65 is open, the unloaded solenoid valve 75 is closed and the gas cooler fan 44 is operated at a low speed. In the moderate capacity non-economized standard mode, also referred to herein as stage 2, the economizer solenoid valve 65 is closed, the unload solenoid valve 75 is closed and the gas cooler fan 44 is operated at a low speed. In the low/minimum capacity unload mode, also referred to herein as stage 3, the economizer solenoid valve 65 is closed, the unload solenoid valve 75 is open and the gas cooler fan 44 is operated in a duty cycle as will be explained in further detail later herein.

The controller 100 also selectively operates the refrigerant vapor compression system 20 in various transition modes when staging down or staging up the refrigerant vapor compression system. For example, when staging down from the economized operation in stage 1, the controller 100 operates the refrigerant vapor compression system for a limited period of time in a first transition down mode referred to as stage 12. When staging down from the non-economized stage 2 to the unloaded operation in stage 3, the controller 100 may also operate the refrigerant vapor compression system 20 for a limited period of time in a second transition down mode referred to as stage 23. Similarly, when staging up from the unloaded mode, stage 3, to the non-economized mode of stage 2, the controller 100 may operate the refrigerant vapor compression system 20 for a limited period of time in a first transition up mode, referred to a stage 32. When staging up from operation in the non-economized mode, stage 2, to operation in the economized mode, stage 1, the controller 100 may operate the refrigerant vapor compression system 20 for a limited period of time in a second transition up mode referred to as stage 21.

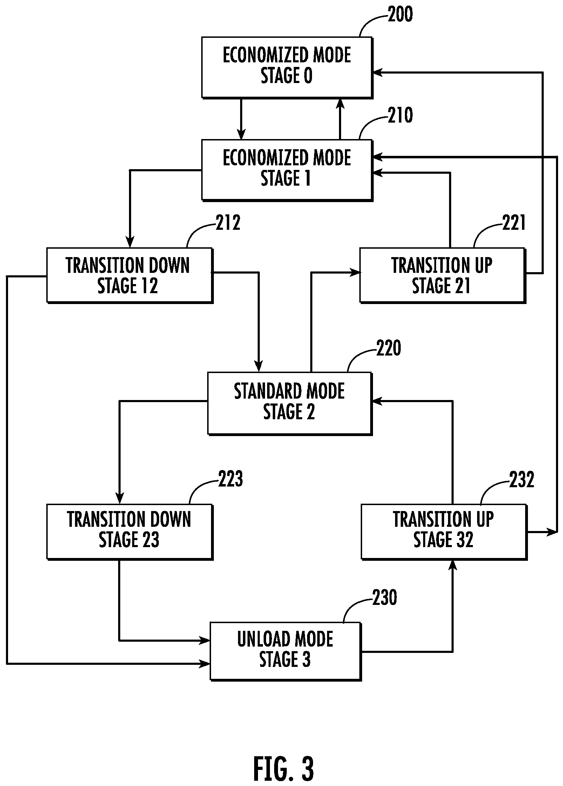

The frequency of the current output from the variable speed drive 34 to the compressor motor 32 is varied in stages 0, 1, 2 and 3 for varying the speed of the compression device 30, and maintained at a respective predetermined frequency that may be determined in accordance with a frequency map in each of the respective transition stages 12, 23, 32 and 21 (FIG. 3). The frequency map comprises an algorithm for determining the optimal VFD output frequency in real time as a function of the sensed ambient air temperature, the sensed return air temperature and the sensed supply air temperature.

The controller 100 controls operation of the refrigerant vapor compression system 20 during transition in such a manner as to reduce, if not eliminate, overshoot and undershoot of the narrow temperature band bounding the box control temperature set point. Referring now to FIG. 3, there is depicted a block diagram process flow chart illustrating an exemplary embodiment of the method disclosed herein for staging down and staging up of the refrigerant vapor compression system 20. In staging down, the controller 100 selectively reduces system capacity, moving from the maximum capacity economized mode, stage 0, at block 200, to the high capacity economized mode, stage 1, at block 220. When the cooling capacity of the compression device 30 is sufficient to meet the cooling demand without use of the economizer circuit and the control temperature has been brought down into the narrow temperature bounding the control temperature set point, the controller 100 will transition the refrigerant vapor compression system 20 down from the economized mode to the unloaded mode. In doing so, the controller 100 implements the first transition down stage 12 at block 212, from which capacity is reduced either directly to the unloaded mode, stage 3, at block 230, or first to the non-economized mode, stage 2, at block 220, and thence through the second transition down stage 23, at block 223, to the unloaded mode, stage 3, at block 230. In staging up, the controller 100 selectively increases system capacity, moving from the unloaded mode, stage 3, at block 230, through the first transition up stage 32, at block 232, to the non-economized mode, stage 2, at block 220, thence through the second transition up stage 21, at block 221, to the high capacity economized mode, stage 1, at block 210, and to the maximum capacity economized mode, stage 0, at block 200.

During operation in the first transition down stage 12, the economizer solenoid valve 65 is open, the unload solenoid valve 75 is closed, the gas cooler fan 44 is operated at a low speed, and the variable speed drive 34 outputs electric current a first predetermined frequency to drive the compression device 30. During operation in the second transition down stage 23, the economizer solenoid valve 65 is closed, the unload solenoid valve 75 is open, the gas cooler fan 44 is operated at a low speed, and the variable speed drive 34 outputs electric current at a second predetermined frequency to drive the compression device 30. During operation in the first transition up stage 32, the economizer solenoid valve 65 is closed, the unload solenoid valve 75 is closed, the gas cooler fan 44 is operated at a low speed, and the variable speed drive 34 outputs electric current at a third predetermined frequency to drive the compression device 30. During operation in the second transition up stage 21, the economizer solenoid valve 65 is open, the unload solenoid valve 75 is closed, the gas cooler fan 44 is operated at low speed, and the variable speed drive 34 outputs electric current at a fourth predetermined frequency to drive the compression device 30. The first, second, third and fourth predetermined frequencies may be determined through use of a frequency map as previously mentioned.

In the transition stages, the controller 100 may be configured to monitor a first parameter and a second parameter and stage out of the transition mode in response to a determination that one or both of a first condition related to the first parameter and a second condition related to the second parameter has been established or established for a particular period of time. It is to be understood that the controller 100 may be configured to use similar logic processes when the refrigerant vapor compression system 20 is operating in any transition down or transition up stage.

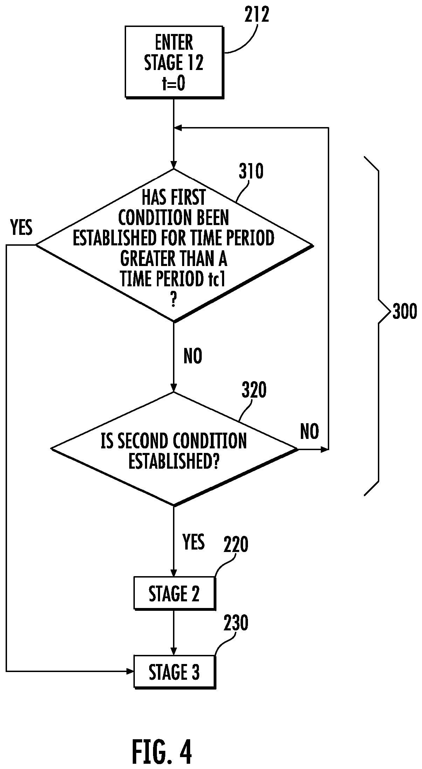

For example, in the first transition down stage 12, the controller 100 may selectively transition down from the economized mode, stage 1, at block 210, to the unloaded mode, at block 230, through either of two routes, that is either directly into the unloaded mode, stage 3, at block 230, or first to the non-economized mode, stage 2, at block 220, and thence through the second transition down mode, stage 23, at block 232, to the unloaded mode, stage 3, at block 230. Referring now to the logic process diagram illustrated in FIG. 4, upon entering the first transition down stage 12, the controller 100 sets a timer to zero and monitors a first condition and a second condition. If the first condition has been established for a time period greater than a preset time period, tc1, t(first condition) > tc1, controller 100 transitions the refrigerant vapor compression system 20 down directly to the unloaded stage 3, at block 230. However, the first condition has not been established for a period of time greater than the preset time period tc1, t(first condition) not > tc1, controller 100 checks whether a second condition is currently satisfied. If so, the controller 100 transitions the refrigerant vapor compression system 20 down to the non-economized loaded stage 2, at block 220, rather than directly into the unloaded stage 3.

For clarity purposes, the nomenclature used herein will be explained before further discussing the method disclosed herein. The expression "t(condition)" translates: the time that the condition within the parentheses has existed. For example, "t(TEMP1 > TEMP2)" would be read as the time that temperature 1 has been greater than temperature 2. "TCTRL" is the control temperature. "TSETPT" is the control temperature set point temperature. "TEMP_TREND" is the average derivative, that is the rate of change, of the temperature differential "TSETPT-TCTRL" over a specified period of time, for example, for purposes of illustration but not limitation, ten seconds.

In an embodiment of the method disclosed herein, when operating in the first transition down mode 12, the controller 100 monitors the rate of change, TEMP_TREND, as the first condition, and the temperature differential TSETPT-TCTRL as the second condition, and repeatedly executes the control loop 300, illustrated in FIG. 4, to determine when to stage down from the first transition stage 12 into one of the non-economized mode, stage 2 at block 220, or the unloaded mode, stage 3 at block 230, and to determine into which of these two modes to transition. In an embodiment, the controller 100 continuously executes the control loop 300 at a loop rate of one Hertz.

At block 310, the controller 100 compares an elapsed time at which the TEMP_TREND has been greater than zero to the preset time period, tc1. If the TEMP_TREND has been greater than 0, that is positive, for an elapsed time greater than the preset time period, t1, then the controller 100 stages down the refrigerant vapor compression system 20 to operation in the unloaded mode, stage 3 at block 230. However, if the TEMP_TREND has not been greater than 0, that is not positive, for an elapsed time greater than the preset time period, tc1, then the controller 100 proceeds to block 320.

At block 320, the controller 100 determines whether the temperature differential TSETPT-TCTRL is less than zero, which means that the sensed control temperature, typically either the current sensed T_{RBAIR} or T_{SBAIR}, is greater than the control temperature set point. If the temperature differential TSETPT-TCTRL is less than zero, the controller 100 stages down the refrigerant vapor compression system 20 to operation in the non-economized mode, stage 2 at block 220. However, if the temperature differential TSETPT-TCTRL is not less than zero, the controller 100 continues to execute the control logic 300 until one of the first and second conditions satisfies the control logic or a preset time out limit has been reached. In the event the time out limit has been reached, the controller 100 will transition down the refrigerant vapor compression system to operation in the unloaded mode, stage 3.

In an embodiment, the controller 100 may be configured to stage down from operation in the non-economized stage 2 to operation in the unloaded stage 3 when, during operation in the second transition down stage 23, the following two conditions are met simultaneously: the output frequency of the variable speed drive 34 powering the compression device 30 has been less than or equal to a lower frequency level that is a preset frequency margin above the minimum output frequency of the variable speed drive for an elapsed time greater than a preset period of time, t5; and the TEMP_TREND has been positive for an elapsed time greater than a preset period of time, t6. In this embodiment, if these two conditions are not met simultaneously, operation continues in the second transition down stage 23 until these conditions are simultaneously met.

In an embodiment, the controller 100 may be configured to stage down from the non-economized stage 2 to the unloaded stage 3 when, during operation in the second transition down stage 23, the temperature differential TSETPT-TCTRL has been negative and has had an absolute value greater than a preset temperature differential for an elapsed time greater than a preset period of time, t7. In this embodiment, operation continues in the unloaded low capacity stage 2 until this condition is met. It is to be understood, however, that the transitioning method discussed herein and illustrated in FIG. 3, may be used in connection with transitioning from the non-economized mode, stage 2, at block 220, to the unloaded mode, stage 3, at block 230, irrespective of the specific criteria used in determining when to stage down from stage 2 to stage 3.

When the refrigerant vapor compression system 20 is operating in the unloaded mode, stage 3, the controller 100 may be configured to control operation of the gas cooler fan 44 in such a way as to preserve the temperature control sensitivity of the variable speed drive 34 driving the variable speed compressor motor 32. For example, the controller 100 may be configured to pulse the gas cooler fan 44 by on/off cycling. Initially in stage 3, the gas cooler fan 44 will be on and operating at low speed. However, as the variable speed drive 34 cycles down to control temperature, the controller 100 is configured to further reduce the effective speed on the gas cooler fan 44 by selectively powering the gas cooler fan on for a first period of time and then powering the gas cooler fan off for a second period of time and then repeat the cycle. The first and second periods of time constitute a duty cycle. The controller 100 may be configured to adjust the first and second periods of time relative to each other to vary the time the gas cooler fan 44 is on and the fan is off within a duty cycle. In an embodiment, the controller 100 may be configured to selectively operate the gas cooler fan 44 to incrementally further reduce the effective speed of the gas cooler fan 44. For example, in an embodiment, the controller 100 may be configured to operate the gas cooler fan 44 through a series of duty cycles wherein the fan on portion of the duty cycle is decreased incrementally. For example, in an embodiment, the fan on portion of duty cycle decreases in 20% increments: 100% on/0% off; 80% on/20% off; 60% on/40% off; 40% on/60% off; 20% on/80% off; 0%on/100% off. It is be to understood that in other embodiments the fan on portion of the duty cycle may decrease in other increments, such as for example, but not limited to increments of 10%. Each duty cycle may span a preselected time period, such as, for example, 40 seconds. Upon completion of the series of duty cycles, the gas cooler fan 44 will remain powered off.

When the refrigerant vapor compression system 20 is operating in the unloaded mode, stage 3, the controller 100 may also be configured to selectively operate electric heaters 56 (FIG. 2) associated with the evaporator coil 52 in such a way as to preserve the temperature control sensitivity of the variable speed drive 34 driving the variable speed compressor motor 32. In the unloaded mode, stage 3, the electric heaters are initially off, and will remain off, unless selectively powered on by the controller 100. For example, in an embodiment, as the variable frequency drive 34 cycles down to control temperature, the controller 100 may be configured to operate the electric heaters through a series of duty cycles wherein in each duty cycle the electric heater is powered on for a first portion of the duty cycle and powered off for a second period of the duty cycle, i.e. the remainder of the duty cycle, with the powered on portion increasing by 5% from one duty cycle to the next duty cycle, until a predetermined maximum power on limit is reached. Each duty cycle may span a preselected time period, such as, for example, 60 seconds. However, the controller 100 may also be configured to operate the electric heaters associated with the evaporator coil 52 at 100% on, if at any point during operation in the unloaded mode, stage 3, the control temperature, TCTRL, falls below the set point temperature, TSETPT, by an amount greater than ΔTLOWER, i.e. drops out of the temperature control band. Upon return of the control temperature, TCTRL, into the control temperature band, the controller 100 may return to pulsing of the electric heaters. The controller 100 may be configured to implement the pulsing of the gas cooler fan 44 and the pulsing of the electric heaters associated with the evaporator coil 52 in such a way as to prevent overlapping of the gas cooler fan cycling and the electric heater cycling.

Referring now to the staging up process illustrated in FIG. 3, the controller 100 is configured to stage up the operation of the refrigerant vapor compression system 20 from the unloaded mode, stage 3, at block 230 to the non-economized mode, stage 2, through the first transition up stage 32 when the cooling demand on the refrigerant vapor compression system 20 exceeds the refrigeration capacity of the refrigerant vapor compression system 20 when operating in the unloaded mode, stage 3. When operating in the first transition up stage 32, at block 232, the controller 100 monitors two conditions and when each condition has been established for a respective predetermined period of time, the controller 100 shifts operation of the refrigerant vapor compression system 20 into the non-economized mode, stage 2, at block 220. In an embodiment, the controller 100 monitors the operating frequency of the variable frequency drive 34, FreqVFD, and the rate of change of the temperature differential, TEMP_ TREND. When the output frequency of the variable speed drive 34 powering the compression device 30 has been greater than or equal to a limit frequency, determined from the frequency map, for an elapsed time greater than a preset period of time, t13 (t(FreqVFD > Freq3) > t13); and the TEMP_TREND has been negative for an elapsed time greater than a preset period of time, t6 (t(TEMP_TREND) < 0) > t14), the controller 100 shifts operation of the refrigerant vapor compression system 20 into the non-economized mode, stage 2. In this embodiment, if these two conditions are not met simultaneously, operation continues in the first transition up stage 32, repeatedly executing a control loop, for example at a loop rate of 1 Hertz, until these conditions are simultaneously met.

When still additional refrigeration capacity is needed to met the cooling demand, the controller 100 is configured of shift operation of the refrigerant vapor compression system 20 from the non-economized mode, stage 2, through the second transition up stage 21 and into operation in one of the economized modes, stage 1 and stage 0. When operating in the second transition up stage 21, the controller 100 again monitors two conditions. In stage 21, the monitored conditions are the rate of change of the temperature differential, TEMP_TREND, and the temperature differential TSETPT-TCTRL. If the rate of change of the temperature differential has been negative for a period of time greater than a present time period t10 (t(TEMP_TREND) < 0) > t10), the controller, at block 221, is configured to shift operation of the refrigerant vapor compression system 20 into the maximum capacity economized mode, stage 0, block 200. However, if the rate of change of the temperature differential has not been negative for a period of time greater than a present time period t10 (t(TEMP_TREND) < 0) > t10), and the temperature differential TSETPT-TCTRL is positive ((TSETPT-TCTRL) > 0), the controller 100, at block 221, is configured to shift operation of the refrigerant vapor compression system 20 into the high capacity economized mode, stage 1, at block 210, rather than into the maximum capacity economized mode, stage 0.

In an embodiment, the controller 100 may be configured to stage up within the economized mode from the high capacity economized mode, stage 1 to the maximum capacity economized mode, stage 0, when, during operation in stage 1, the following two conditions are met simultaneously: the output frequency of the variable speed drive 34 powering the compression device 30 has been greater than a frequency level, FREQ2, for an elapsed time greater than a preset period of time, t8 ((t(TEMP_TREND) < 0) > t10)); and the TEMP_TREND has been negative for an elapsed time greater than a preset period of time, t9, (t(TEMP_TREND) < 0) > t9)). If these two conditions are simultaneously met, the configured is configured to shift operation of the refrigeration vapor compression system 20 into the maximum capacity economized mode, stage 0. In this embodiment, if these two conditions are not met simultaneously, operation continues in the high capacity economized mode, stage 1, until these conditions are simultaneously met.

In an embodiment, the controller 100 may select the various stage transition frequencies FREQ1, FREQ2 and FREQ3 from a pre-defined frequency map wherein the stage transition frequency is defined as a function of selected operating parameters indicative of cooling demand. For example, the stage transition frequencies may be calculated as a function of the ambient air temperature, T_{AMBAIR}, the supply air temperature, T_{SBAIR}, and the return air temperature, T_{RBAIR}.

The terminology used herein is for the purpose of description, not limitation. Specific structural and functional details disclosed herein are not to be interpreted as limiting, but merely as basis for teaching one skilled in the art to employ the present invention. Those skilled in the art will also recognize the equivalents that may be substituted for elements described with reference to the exemplary embodiments disclosed herein without departing from the scope of the present invention.

While the present invention has been particularly shown and described with reference to the exemplary embodiments as illustrated in the drawing, it will be recognized by those skilled in the art that various modifications may be made without departing from the scope of the invention. For example, the refrigerant vapor compression system 20 may further include an intercooler heat exchanger (not shown) disposed in the primary refrigerant circuit between the discharge outlet of the first compression stage 30a and the inlet to the second compression stage 30b whereby the partially compressed (intermediate pressure) refrigerant vapor (gas) passing from the discharge outlet of the first compression stage to the inlet to the second compression stage passes in heat exchange relationship with a flow of cooling media, such as, for example, but not limited to the cooling air flow generated by the gas cooler fan.

Therefore, it is intended that the present disclosure not be limited to the particular embodiment(s) disclosed as, but that the disclosure will include all embodiments falling within the scope of the appended claims,

## Claims

1. A method for avoiding undesirable overshoot and undershoot of a temperature band bounding a control temperature set point for a temperature within a temperature controlled space, including the steps of
selectively operating a transcritical refrigerant vapor compression system for supplying conditioned air to a temperature controlled space in at least one higher capacity mode or in at least one lower capacity mode; and
operating the transcritical refrigerant vapor compression system in at least one transition mode when staging up or staging down between the higher capacity mode and the lower capacity mode
**characterized in that** operation in the transition mode comprises:
monitoring a temperature control differential (TSETPT - TCRTL), between a control temperature set point (TSETPT), and a sensed control temperature (TCRTL); and
establishing a trend in a change of the temperature control differential over an elapsed time, wherein establishing a trend in a change of the temperature control differential over an elapsed time comprises calculating an average derivative of the temperature control differential over the elapsed time, and
entering a stage down transition mode when staging down from operation in a high capacity mode to operation in one of a first low capacity mode and a second lower capacity mode; determining whether the average derivative of the temperature control differential has been positive for an elapsed time greater than a preset first period of time; and if the average derivative of the temperature control differential has been positive for an elapsed time greater than the preset first period of time, staging down to the second lower capacity mode bypassing the first low capacity mode.

2. The method as recited in claim 1 further comprising:
entering a stage down transition mode for staging down from operation in a high capacity mode to operation in one of a first low capacity mode and a second lower capacity mode;
determining whether the average derivative of the temperature control differential has been positive for an elapsed time greater than a preset first period of time; and
if the average derivative of the temperature control differential has been positive for an elapsed time greater than the preset first period of time, staging down to the second lower capacity mode and bypassing the first low capacity mode.

3. The method as recited in claim 2 further comprising:
if the average derivative of the temperature control differential has not been positive for an elapsed time greater than the preset first period of time, determining whether the temperature control differential is currently less than zero; and
if the temperature control differential is currently less than zero, staging down to the first low capacity mode,
the method in particular comprising:
if the temperature control differential is not currently less than zero, determining whether the temperature control differential has been greater than zero for a preset second period of time; and
if the temperature control differential has been greater than zero for the second preset period of time, staging down to the second lower capacity mode and bypassing the first low capacity mode, and
if the temperature control differential has not been greater than zero for the second preset period of time, continuing operation in the high capacity mode.

4. The method as recited in claim 2 further comprising:
entering a stage up transition mode for staging up from operation in a low capacity mode to operation in one of a first high capacity mode and a second higher capacity mode; determining whether the average derivative of the temperature control differential has been negative for an elapsed time greater than a preset third period of time; and
if the average derivative of the temperature control differential has been negative for an elapsed time greater than the preset third period of time, staging up to the second higher capacity mode and bypassing the first high capacity mode,the method in particular comprising:
if the average derivative of the temperature control differential has not been negative for an elapsed time greater than the preset third period of time, determining whether the temperature control differential is currently greater than zero; and
if the temperature control differential is currently greater than zero, staging up to the first high capacity mode.

5. The method as recited in claim 4 further comprising:
if the temperature control differential is not currently greater than zero, determining whether the temperature control differential has been less than zero for a preset fourth period of time; and
if the temperature control differential has been less than zero for the fourth preset period of time, staging up to the second higher capacity mode and bypassing the first high capacity mode, and
if the temperature control differential has not been less than zero for the fourth preset period of time, continuing operation in the low capacity mode.

6. A refrigerant vapor compression system (20) configured for supplying conditioned air to a temperature controlled space and comprising:
a compression device (30) for compressing a refrigerant vapor from a suction pressure to a discharge pressure, a refrigerant heat rejection heat exchanger (40) and a refrigerant heat absorption heat exchanger (50) arranged in serial refrigerant flow relationship in a transcritical cycle closed-loop primary refrigerant circuit, the refrigerant heat rejection heat exchanger functioning as a refrigerant gas cooler and the refrigerant heat absorption heat exchanger functioning as a refrigerant evaporator; and
a controller (100) operatively associated with the refrigerant vapor compression system, the controller configured for avoiding undesirable overshoot and undershoot of a temperature band bounding a control temperature set point for a temperature within the temperature controlled space;
by controlling the refrigerant vapor compression system to selectively operate in at least one higher capacity mode, in at least one lower capacity mode; or in a transition mode when staging up or staging down between a higher capacity mode and a lower capacity mode, **characterized in that** the controller (100) is further configured to monitor a temperature control differential (TSETPT - TCRTL), between a control temperature set point (TSETPT), and a sensed control temperature (TCRTL), during operation in the transition mode; and to calculate an average derivative of the temperature control differential over an elapsed time during operation in the transition mode,
wherein the controller is further configured to:
enter a stage down transition mode when staging down from operation in a high capacity mode to operation in one of a first low capacity mode and a second lower capacity mode; determine whether the average derivative of the temperature control differential has been positive for an elapsed time greater than a preset first period of time; and
if the average derivative of the temperature control differential has been positive for an elapsed time greater than the preset first period of time, stage down to the second lower capacity mode bypassing the first low capacity mode.

7. The refrigerant vapor compression system as recited in claim 6, wherein the controller is further configured to:
if the average derivative of the temperature control differential has not been positive for an elapsed time greater than the preset first period of time, determine whether the temperature control differential is currently less than zero; and
if the temperature control differential is currently less than zero, stage down to the first low capacity mode, wherein the controller is in particular configured to:
if the temperature control differential is not currently less than zero, determine whether the temperature control differential has been greater than zero for a preset second period of time; and
if the temperature control differential has been greater than zero for the second preset period of time, stage down to the second lower capacity mode bypassing the first low capacity mode.

8. The refrigerant vapor compression system as recited in claim 7, wherein the controller is further configured to:
enter a stage up transition mode for staging up from operation in a low capacity mode to operation in one of a first high capacity mode and a second higher capacity mode;
determine whether the average derivative of the temperature control differential has been negative for an elapsed time greater than a preset third period of time; and
if the average derivative of the temperature control differential has been negative for an elapsed time greater than the preset third period of time, stage up to the second higher capacity mode bypassing the first high capacity mode.

9. The refrigerant vapor compression system as recited in claim 8, wherein the controller is further configured to:
if the average derivative of the temperature control differential has not been negative for an elapsed time greater than the preset third period of time, determine whether the temperature control differential is currently greater than zero; and
if the temperature control differential is currently greater than zero, stage up to the first high capacity mode, wherein the controller is in particular configured to:
if the temperature control differential is not currently greater than zero, determine whether the temperature control differential has been less than zero for a preset fourth period of time; and
if the temperature control differential has been less than zero for the fourth preset period of time, stage up to the second higher capacity mode bypassing the first high capacity mode.

10. The method of any of claims 1 to 5 employed for controlling low capacity operation of a transcritical refrigerant vapor compression system (20) for supplying conditioned air to a temperature controlled space, the refrigerant vapor compression system having a primary refrigerant flow circuit including a compressor (30) driven by a variable speed motor (32) driven by a variable speed drive, a refrigerant gas cooler (40), high pressure expansion device (45), flash tank (60), an evaporator expansion device (55), and an evaporator (50) disposed in serial refrigerant flow arrangement in the primary refrigerant flow circuit and a compressor unload circuit including an unload valve selectively positionable to open or close the compressor unload circuit, the method further comprising:
opening the unload valve to allow refrigerant to pass from the compressor through the compressor unload circuit to a suction pressure portion of the primary refrigerant flow circuit; opening the high pressure expansion valve to a full open position;
operating the compressor drive motor at a frequency to drive the compressor at a low/minimum speed; and
controlling operation of at least one of an air moving device associated with the gas cooler or a heating device associated with the evaporator for heating a flow of air drawn from the temperature controlled space, wherein operation of at least one of an air moving device associated with the gas cooler or a heating device associated with the evaporator for heating a flow of air drawn from the temperature controlled space in particular is controlled in such a way as to preserve the temperature control sensitivity of the variable speed drive driving the variable speed motor driving the compressor.

11. The method as recited in claim 10 wherein controlling operation of the air moving device associated with the gas cooler comprises cycling the gas cooler air moving device through a plurality of on/off duty cycles wherein in each duty cycle the gas cooler air moving device is on for a first time period and off for a second time period, wherein in particular the first time period is increased and the second time period is increased when advancing from a duty cycle to a next duty cycle when cycling the air moving device through a plurality of on/off duty cycles.

12. The method as recited in claim 10 wherein controlling operation of a heating device associated with the evaporator comprises selectively cycling the heating device associated with the evaporator through a plurality of on/off duty cycles for repeatedly heating the air flow for a first time period and not heating the air flow for a second time period and/or selectively varying the amount of electric current supplied to an electric heater associated with the evaporator.

## Patentansprüche

1. Verfahren zum Vermeiden einer unerwünschten Überschreitung und Unterschreitung eines Temperaturbereichs, der einen Steuertemperatursollwert für eine Temperatur innerhalb eines temperaturkontrollierten Raums begrenzt, die folgenden Schritte umfassend:
selektives Betreiben eines transkritischen Kältemitteldampfkompressionssystems zum Liefern von klimatisierter Luft an einen temperaturkontrollierten Raum in mindestens einem Modus mit höherer Kapazität oder in mindestens einem Modus mit niedrigerer Kapazität; und Betreiben des transkritischen Kältemitteldampfkompressionssystems in mindestens einem Übergangsmodus beim Hoch- oder Herunterschalten zwischen dem Modus mit höherer Kapazität und dem Modus mit niedrigerer Kapazität,
**dadurch gekennzeichnet, dass** der Betrieb in dem Übergangsmodus Folgendes umfasst:
Überwachen einer Temperatursteuerdifferenz (TSETPT-TCRTL) zwischen einem Steuertemperatursollwert (TSETPT) und einer erfassten Steuertemperatur (TCRTL);
und
Ermitteln einer Tendenz einer Veränderung der Temperatursteuerdifferenz über eine verstrichene Zeit, wobei das Ermitteln einer Tendenz der Veränderung der Temperatursteuerdifferenz über eine verstrichene Zeit das Berechnen einer durchschnittlichen Ableitung der Temperatursteuerdifferenz über den verstrichenen Zeitraum und das Eintreten in einen Nach-unten-Übergangsmodus, wenn vom Betrieb in einem Modus mit höherer Kapazität in einen aus einem ersten Modus mit niedriger Kapazität und einen zweiten Modus mit niedrigerer Kapazität heruntergeschaltet wird, umfasst; Ermitteln, ob die durchschnittliche Ableitung der Temperatursteuerdifferenz für eine verstrichene Zeit, die größer als eine vorbestimmte erste Zeitdauer ist, positiv war; und, wenn die durchschnittliche Ableitung der Temperatursteuerdifferenz für eine verstrichene Zeit, die größer als die vorbestimmte erste Zeitdauer ist, positiv war, Herunterschalten auf den zweiten Modus mit niedrigerer Kapazität unter Umgehung des ersten Modus mit niedriger Kapazität.

2. Verfahren nach Anspruch 1, ferner Folgendes umfassend:
Eintreten in einen Nach-unten-Übergangsmodus zum Herunterschalten von dem Betrieb in einem Modus mit hoher Kapazität in den Betrieb in einem aus einem ersten Modus mit niedriger Kapazität und einem zweiten Modus mit niedrigerer Kapazität;
Ermitteln, ob die durchschnittliche Ableitung der Temperatursteuerdifferenz für eine verstrichene Zeit, die größer als eine vorbestimmte erste Zeitdauer ist, positiv war;
und
wenn die durchschnittliche Ableitung der Temperatursteuerdifferenz für eine verstrichene Zeit, die größer als die vorbestimmte erste Zeitdauer ist, positiv war, Herunterschalten auf den zweiten Modus mit niedrigerer Kapazität und Umgehen des ersten Modus mit niedriger Kapazität.

3. Verfahren nach Anspruch 2, ferner Folgendes umfassend:
wenn die durchschnittliche Ableitung der Temperatursteuerdifferenz für eine verstrichene Zeit, die größer als die vorbestimmte erste Zeitdauer ist, nicht positiv war, Ermitteln, ob die Temperatursteuerdifferenz aktuell kleiner als Null ist; und
wenn die Temperatursteuerdifferenz aktuell kleiner als Null ist, Herunterschalten auf den ersten Modus mit niedriger Kapazität,
wobei das Verfahren insbesondere Folgendes umfasst:
wenn die Temperatursteuerdifferenz aktuell nicht kleiner als Null ist, Ermitteln, ob die Temperatursteuerdifferenz für eine vorbestimmte zweite Zeitdauer größer als Null war; und
wenn die Temperatursteuerdifferenz für die zweite vorbestimmte Zeitdauer größer als Null war, Herunterschalten auf den zweiten Modus mit niedrigerer Kapazität und Umgehen des ersten Modus mit niedriger Kapazität, und
wenn die Temperatursteuerdifferenz für die zweite vorbestimmte Zeitdauer nicht größer als Null war, Fortsetzen des Betriebs in dem Modus mit hoher Kapazität.

4. Verfahren nach Anspruch 2, ferner Folgendes umfassend:
Eintreten in einen Nach-oben-Übergangsmodus zum Hochschalten von dem Betrieb in einem Modus mit niedriger Kapazität in den Betrieb in einem aus einem ersten Modus mit hoher Kapazität und einem zweiten Modus mit höherer Kapazität; Ermitteln, ob die durchschnittliche Ableitung der Temperatursteuerdifferenz für eine verstrichene Zeit, die größer als eine vorbestimmte dritte Zeitdauer ist, negativ war; und
wenn die durchschnittliche Ableitung der Temperatursteuerdifferenz für eine verstrichene Zeit, die größer als die vorbestimmte dritte Zeitdauer ist, negativ war, Hochschalten auf den zweiten Modus mit höherer Kapazität und Umgehen des ersten Modus mit hoher Kapazität, wobei das Verfahren insbesondere Folgendes umfasst:
wenn die durchschnittliche Ableitung der Temperatursteuerdifferenz für eine verstrichene Zeit, die größer als die vorbestimmte dritte Zeitdauer ist, nicht negativ war, Ermitteln, ob die Temperatursteuerdifferenz aktuell größer als Null ist; und
wenn die Temperatursteuerdifferenz aktuell größer als Null ist, Hochschalten auf den ersten Modus mit hoher Kapazität.

5. Verfahren nach Anspruch 4, ferner Folgendes umfassend:
wenn die Temperatursteuerdifferenz aktuell nicht größer als Null ist, Ermitteln, ob die Temperatursteuerdifferenz für eine vorbestimmte vierte Zeitdauer kleiner als Null war; und
wenn die Temperatursteuerdifferenz für die vierte vorbestimmte Zeitdauer kleiner als Null war, Hochschalten auf den zweiten Modus mit höherer Kapazität und Umgehen des ersten Modus mit hoher Kapazität, und
wenn die Temperatursteuerdifferenz für die vierte vorbestimmte Zeitdauer nicht kleiner als Null war, Fortsetzen des Betriebs in dem Modus mit niedriger Kapazität.

6. Kältemitteldampfkompressionssystem (20), das zum Liefern von klimatisierter Luft an einen temperaturkontrollierten Raum konfiguriert ist und Folgendes umfasst:
eine Kompressionsvorrichtung (30) zum Komprimieren eines Kältemitteldampfs von einem Saugdruck auf einen Austrittsdruck, einen Kältemittel-Wärmeabgabe-Wärmetauscher (40) und einen Kältemittel-Wärmeaufnahme-Wärmetauscher (50), die in einer Kältemittelströmungsbeziehung in Reihe in einem primären rückgekoppelten Kältemittelkreislauf mit transkritischem Zyklus angeordnet sind, wobei der Kältemittel-Wärmeabgabe-Wärmetauscher als ein Kältemittelgaskühler arbeitet und der Kältemittel-Wärmeaufnahme-Wärmetauscher als ein Kältemittelverdampfer arbeitet; und
eine Steuerung (100), die in Wirkverbindung mit dem Kältemitteldampfkompressionssystem verbunden ist, wobei die Steuerung zum Vermeiden eines unerwünschten Überschreitens und Unterschreitens eines Temperaturbereichs, der einen Steuertemperatursollwert für eine Temperatur innerhalb des temperaturkontrollierten Raums begrenzt, konfiguriert ist;
durch Steuern des Kältemitteldampfkompressionssystems, so dass es selektiv in mindestens einem Modus mit höherer Kapazität, in mindestens einem Modus mit niedrigerer Kapazität; oder in einem Übergangsmodus beim Hoch- oder Herunterschalten zwischen einem Modus mit höherer Kapazität und einem Modus mit niedrigerer Kapazität, arbeitet,
**dadurch gekennzeichnet, dass** die Steuerung (100) ferner so konfiguriert ist, dass sie während des Betriebs in dem Übergangsmodus eine Temperatursteuerdifferenz (TSETPT-TCRTL) zwischen einem Steuertemperatursollwert (TSETPT) und einer erfassten Steuertemperatur (TCRTL) überwacht; und eine durchschnittliche Ableitung der Temperatursteuerdifferenz über eine verstrichene Zeit während des Betriebs in dem Übergangsmodus berechnet,
wobei die Steuerung ferner so konfiguriert ist, dass:
sie in einen Nach-unten-Übergangsmodus eintritt, wenn sie von dem Betrieb in einem Modus mit hoher Kapazität in einen aus einem ersten Modus mit niedriger Kapazität und einem zweiten Modus mit niedrigerer Kapazität herunterschaltet; sie ermittelt, ob die durchschnittliche Ableitung der Temperatursteuerdifferenz für eine verstrichene Zeit, die größer als eine vorbestimmte erste Zeitdauer ist, positiv war;
und
wenn die durchschnittliche Ableitung der Temperatursteuerdifferenz für eine verstrichene Zeit, die größer als die vorbestimmte erste Zeitdauer ist, positiv war, unter Umgehung des ersten Modus mit niedriger Kapazität in den zweiten Modus mit niedrigerer Kapazität herunterschaltet.

7. Kältemitteldampfkompressionssystem nach Anspruch 6, wobei die Steuerung ferner dazu konfiguriert ist, dass sie:
wenn die durchschnittliche Ableitung der Temperatursteuerdifferenz für eine verstrichene Zeit, die größer als die vorbestimmte erste Zeitdauer ist, nicht positiv war, ermittelt, ob die Temperatursteuerdifferenz aktuell kleiner als Null ist; und
wenn die Temperatursteuerdifferenz aktuell kleiner als Null ist, in den ersten Modus mit niedriger Kapazität herunterschaltet, wobei die Steuerung insbesondere so konfiguriert ist, dass sie:
wenn die Temperatursteuerdifferenz aktuell nicht kleiner als Null ist, ermittelt, ob die .Temperatursteuerdifferenz für eine vorbestimmte zweite Zeitdauer größer als Null war; und
wenn die Temperatursteuerdifferenz für die zweite vorbestimmte Zeitdauer größer als Null war, unter Umgehung des ersten Modus mit niedriger Kapazität in den zweiten Modus mit niedrigerer Kapazität herunterschaltet.

8. Kältemitteldampfkompressionssystem nach Anspruch 7, wobei die Steuerung ferner dazu konfiguriert ist, dass sie:
in einen Nach-oben-Übergangsmodus zum Hochschalten von dem Betrieb in einem Modus mit niedriger Kapazität in einen Betrieb in einem aus einem ersten Modus mit hoher Kapazität und einem zweiten Modus mit höherer Kapazität eintritt;
ermittelt, ob die durchschnittliche Ableitung der Temperatursteuerdifferenz für eine verstrichene Zeit, die größer als eine vorbestimmte dritte Zeitdauer ist, negativ war; und
wenn die durchschnittliche Ableitung der Temperatursteuerdifferenz für eine verstrichene Zeit, die größer als die vorbestimmte dritte Zeitdauer ist, negativ war, Kapazität unter Umgehung des ersten Modus mit hoher Kapazität in den zweiten Modus mit höherer hochschaltet.

9. Kältemitteldampfkompressionssystem nach Anspruch 8, wobei die Steuerung ferner dazu konfiguriert ist, dass sie:
wenn die durchschnittliche Ableitung der Temperatursteuerdifferenz für eine verstrichene Zeit, die größer als die vorbestimmte dritte Zeitdauer ist, nicht negativ war, ermittelt, ob die Temperatursteuerdifferenz aktuell größer als Null ist; und
wenn die Temperatursteuerdifferenz aktuell größer als Null ist, in den ersten Modus mit hoher Kapazität hochschaltet, wobei die Steuerung insbesondere so konfiguriert ist, dass sie:
wenn die Temperatursteuerdifferenz aktuell nicht größer als Null ist, ermittelt, ob die Temperatursteuerdifferenz für eine vorbestimmte vierte Zeitdauer kleiner als Null war; und
wenn die Temperatursteuerdifferenz für die vierte vorbestimmte Zeitdauer kleiner als Null war, unter Umgehung des ersten Modus mit hoher Kapazität in den zweiten Modus mit höherer Kapazität hochschaltet.

10. Verfahren nach einem der Ansprüche 1 bis 5, das angewandt wird, um einen Betrieb mit niedriger Kapazität eines transkritischen Kältemitteldampfkompressionssystems (20) zum Liefern von klimatisierter Luft an einen temperaturkontrollierten Raum zu steuern, wobei das Kältemitteldampfkompressionssystem einen primären Kältemittelströmungskreis aufweist, der einen Kompressor (30), der von einem drehzahlveränderlichen Motor (32) angetrieben wird, der von einer Antriebssteuerung mit veränderlicher Drehzahl angetrieben wird, einen Kältemittelgaskühler (40), ein Hochdruckexpansionsorgan (45), ein Entspannungsgefäß (60), ein Verdampferexpansionsorgan (55) und einen Verdampfer (50) in einer Kältemittelströmungsanordnung in Reihe in dem primären Kältemittelströmungskreis beinhaltet, und einen Kompressorentladekreis aufweist, der ein Entladeventil, das selektiv eingestellt werden kann, um den Kompressorentladekreis zu öffnen oder zu schließen, beinhaltet, wobei das Verfahren ferner Folgendes umfasst:
Öffnen des Entladeventils, um zuzulassen, dass Kältemittel von dem Kompressor durch den Kompressorentladekreis zu einem Saugdruckabschnitt des primären Kältemittelströmungskreises strömt; Öffnen des Hochdruckexpansionsventils in eine vollständig offene Position;
Betreiben des Kompressorantriebmotors mit einer Frequenz, so dass der Kompressor mit einer niedrigen/minimalen Drehzahl angetrieben wird; und
Steuern des Betriebs mindestens eines aus einer Luftbewegungsvorrichtung, die mit dem Gaskühler verbunden ist, oder einer Heizvorrichtung, die mit dem Verdampfer verbunden ist, um einen Luftstrom, der aus dem temperaturkontrollierten Raum abgesaugt wird, zu erwärmen, wobei der Betrieb mindestens eines aus einer Luftbewegungsvorrichtung, die mit dem Gaskühler verbunden ist, oder einer Heizvorrichtung, die mit dem Verdampfer verbunden ist, um einen Luftstrom, der aus dem temperaturkontrollierten Raum abgesaugt wird, zu erwärmen, insbesondere derart gesteuert wird, dass die Temperatursteuerempfindlichkeit der Antriebssteuerung, die den drehzahlveränderlichen Motor, der den Kompressor antreibt, mit veränderlicher Drehzahl antreibt, erhalten bleibt.

11. Verfahren nach Anspruch 10, wobei das Steuern des Betriebs der Luftbewegungsvorrichtung, die mit dem Gaskühler verbunden ist, das Durchlaufenlassen der Gaskühlerluftbewegungsvorrichtung durch eine Vielzahl von An-/ Aus-Arbeitszyklen umfasst, wobei in jedem Arbeitszyklus die Gaskühlerluftbewegungsvorrichtung für einen ersten Zeitraum an und für einen zweiten Zeitraum aus ist, wobei insbesondere der erste Zeitraum vergrößert wird und der zweite Zeitraum vergrößert wird, wenn beim Durchlaufenlassen der Luftbewegungsvorrichtung durch eine Vielzahl von An-/Aus-Arbeitszyklen von einem Arbeitszyklus zu einem nächsten Arbeitszyklus vorgerückt wird.

12. Verfahren nach Anspruch 10, wobei das Steuern des Betriebs einer Heizvorrichtung, die mit dem Verdampfer verbunden ist, das selektive Durchlaufenlassen der Heizvorrichtung, die mit dem Verdampfer verbunden ist, durch eine Vielzahl von An-/Aus-Arbeitszyklen, um wiederholt den Luftstrom für einen ersten Zeitraum zu erwärmen und für einen zweiten Zeitraum nicht zu erwärmen, und/oder das selektive Variieren der Menge an elektrischem Strom, die einem elektrischen Heizgerät, das mit dem Verdampfer verbunden ist, bereitgestellt wird, umfasst.

## Revendications

1. Procédé pour éviter un pic supérieur et un pic inférieur indésirables d'une bande de température délimitant un point de consigne de température de régulation pour une température à l'intérieur d'un espace régulé en température, incluant les étapes de :
fonctionnement sélectif d'un système de compression de vapeur de réfrigérant transcritique pour fournir de l'air conditionné à un espace régulé en température dans au moins un mode à plus grande capacité ou dans au moins un mode à plus faible capacité ; et
fonctionnement du système de compression de vapeur de réfrigérant transcritique dans au moins un mode de transition lors d'une augmentation progressive ou d'une réduction progressive entre le mode à plus grande capacité et le mode à plus faible capacité,
**caractérisé en ce que** le fonctionnement dans le mode transition comprend :
la surveillance d'un différentiel de régulation de température (TSETPT - TCRTL), entre un point de consigne de température de régulation (TSETPT), et une température de régulation détectée (TCRTL) ; et
l'établissement d'une tendance d'un changement du différentiel de régulation de température sur un temps écoulé, dans lequel l'établissement d'une tendance d'un changement du différentiel de régulation de température sur un temps écoulé comprend le calcul d'une dérivée moyenne du différentiel de régulation de température sur le temps écoulé, et
l'entrée dans un mode de transition de réduction progressive lors de la réduction progressive d'un fonctionnement dans un mode à grande capacité à un fonctionnement dans l'un d'un premier mode à faible capacité et d'un second mode à plus faible capacité ; le fait de déterminer si la dérivée moyenne du différentiel de régulation de température a été positive pendant un temps écoulé supérieur à une première période de temps prédéfinie ; et si la dérivée moyenne du différentiel de régulation de température a été positive pendant un temps écoulé supérieur à la première période de temps prédéfinie, la réduction progressive vers le second mode à plus faible capacité en contournant le premier mode à faible capacité.

2. Procédé selon la revendication 1, comprenant en outre :
l'entrée dans un mode de transition de réduction progressive pour la réduction progressive d'un fonctionnement dans un mode à grande capacité à un fonctionnement dans l'un d'un premier mode à faible capacité et d'un second mode à plus faible capacité ;
le fait de déterminer si la dérivée moyenne du différentiel de régulation de température a été positive pendant un temps écoulé supérieur à une première période de temps prédéfinie ; et
si la dérivée moyenne du différentiel de régulation de température a été positive pendant un temps écoulé supérieur à la première période de temps prédéfinie, la réduction progressive vers le second mode à plus faible capacité et le contournement du premier mode à faible capacité.

3. Procédé selon la revendication 2, comprenant en outre :
si la dérivée moyenne du différentiel de régulation de température n'a pas été positive pendant un temps écoulé supérieur à la première période de temps prédéfinie, le fait de déterminer si le différentiel de régulation de température est actuellement inférieur à zéro ; et
si le différentiel de régulation de température est actuellement inférieur à zéro, la réduction progressive vers le premier mode à faible capacité,
le procédé comprenant en particulier :
si le différentiel de régulation de température n'est pas actuellement inférieur à zéro, le fait de déterminer si le différentiel de régulation de température a été supérieur à zéro pendant une deuxième période de temps prédéfinie ; et
si le différentiel de régulation de température a été supérieur à zéro pendant la deuxième période de temps prédéfinie, la réduction progressive vers le second mode à plus faible capacité et le contournement du premier mode à faible capacité, et
si le différentiel de régulation de température n'a pas été supérieur à zéro pendant la deuxième période de temps prédéfinie, la poursuite du fonctionnement dans le mode à grande capacité.

4. Procédé selon la revendication 2, comprenant en outre :
l'entrée dans un mode de transition d'augmentation progressive pour augmenter progressivement d'un fonctionnement dans un mode à faible capacité à un fonctionnement dans l'un d'un premier mode à grande capacité et d'un second mode à plus grande capacité ; le fait de déterminer si la dérivée moyenne du différentiel de régulation de température a été négative pendant un temps écoulé supérieur à une troisième période de temps prédéfinie ; et
si la dérivée moyenne du différentiel de régulation de température a été négative pendant un temps écoulé supérieur à la troisième période de temps prédéfinie, l'augmentation progressive vers le second mode à plus grande capacité et le contournement du premier mode à grande capacité, le procédé comprenant en particulier :
si la dérivée moyenne du différentiel de régulation de température n'a pas été négative pendant un temps écoulé supérieur à la troisième période de temps prédéfinie, le fait de déterminer si le différentiel de régulation de température est actuellement supérieur à zéro ; et
si le différentiel de régulation de température est actuellement supérieur à zéro, l'augmentation progressive vers le premier mode à grande capacité.

5. Procédé selon la revendication 4, comprenant en outre :
si le différentiel de régulation de température n'est pas actuellement supérieur à zéro, le fait de déterminer si le différentiel de régulation de température a été inférieur à zéro pendant une quatrième période de temps prédéfinie ; et
si le différentiel de régulation de température a été inférieur à zéro pendant la quatrième période de temps prédéfinie, l'augmentation progressive vers le second mode à plus grande capacité et le contournement du premier mode à grande capacité, et
si le différentiel de régulation de température n'a pas été inférieur à zéro pendant la quatrième période de temps prédéfinie, la poursuite du fonctionnement dans le mode à faible capacité.

6. Système de compression de vapeur de réfrigérant (20) conçu pour fournir de l'air conditionné à un espace régulé en température et comprenant :
un dispositif de compression (30) pour comprimer une vapeur de réfrigérant d'une pression d'aspiration à une pression de refoulement, un échangeur de chaleur à rejet de chaleur de réfrigérant (40) et un échangeur de chaleur à absorption de chaleur de réfrigérant (50) agencés en relation d'écoulement de réfrigérant en série dans un circuit de réfrigérant primaire à boucle fermée à cycle transcritique, l'échangeur de chaleur à rejet de chaleur de réfrigérant servant de refroidisseur de gaz réfrigérant et l'échangeur de chaleur à absorption de chaleur de réfrigérant servant d'évaporateur de réfrigérant ; et
un dispositif de commande (100) associé fonctionnellement au système de compression de vapeur de réfrigérant, le dispositif de commande étant conçu pour éviter un pic supérieur et un pic inférieur indésirables d'une bande de température délimitant un point de consigne de température de régulation pour une température à l'intérieur d'un espace régulé en température ;
en régulant le système de compression de vapeur de réfrigérant pour qu'il fonctionne sélectivement dans au moins un mode à plus grande capacité, dans au moins un mode à plus faible capacité ;
ou dans un mode de transition lors de l'augmentation progressive ou de la réduction progressive entre un mode à plus grande capacité et un mode à plus faible capacité,
**caractérisé en ce que** le dispositif de commande (100) est conçu en outre pour surveiller un différentiel de régulation de température (TSETPT - TCRTL), entre un point de consigne de température de régulation (TSETPT), et une température de régulation détectée (TCRTL), lors du fonctionnement dans le mode de transition ; et pour calculer une dérivée moyenne du différentiel de régulation de température sur un temps écoulé lors du fonctionnement dans le mode de transition,
dans lequel le dispositif de commande est conçu en outre pour :
entrer dans un mode de transition de réduction progressive lors de la réduction progressive d'un fonctionnement dans un mode à grande capacité à un fonctionnement dans l'un d'un premier mode à faible capacité et d'un second mode à plus faible capacité ;
déterminer si la dérivée moyenne du différentiel de régulation de température a été positive pendant un temps écoulé supérieur à une première période de temps prédéfinie ; et
si la dérivée moyenne du différentiel de régulation de température a été positive pendant un temps écoulé supérieur à la première période de temps prédéfinie, réduire progressivement au second mode à plus faible capacité en contournant le premier mode à faible capacité.

7. Système de compression de vapeur de réfrigérant selon la revendication 6, dans lequel le dispositif de commande est conçu en outre pour :
si la dérivée moyenne du différentiel de régulation de température n'a pas été positive pendant un temps écoulé supérieur à la première période de temps prédéfinie, déterminer si le différentiel de régulation de température est actuellement inférieur à zéro ; et
si le différentiel de régulation de température est actuellement inférieur à zéro, réduire progressivement au premier mode à faible capacité, dans lequel le dispositif de commande est conçu en particulier pour :
si le différentiel de régulation de température n'est pas actuellement inférieur à zéro, déterminer si le différentiel de régulation de température a été supérieur à zéro pendant une deuxième période de temps prédéfinie ; et
si le différentiel de régulation de température a été supérieur à zéro pendant la deuxième période de temps prédéfinie, réduire progressivement au second mode à plus faible capacité en contournant le premier mode à faible capacité.

8. Système de compression de vapeur de réfrigérant selon la revendication 7, dans lequel le dispositif de commande est conçu en outre pour :
entrer dans un mode de transition d'augmentation progressive pour l'augmentation progressive d'un fonctionnement dans un mode à faible capacité à un fonctionnement dans l'un d'un premier mode à grande capacité et d'un second mode à plus grande capacité ;
déterminer si la dérivée moyenne du différentiel de régulation de température a été négative pendant un temps écoulé supérieur à une troisième période de temps prédéfinie ; et
si la dérivée moyenne du différentiel de régulation de température a été négative pendant un temps écoulé supérieur à la troisième période de temps prédéfinie, augmenter progressivement au second mode à plus grande capacité en contournant le premier mode à grande capacité.

9. Système de compression de vapeur de réfrigérant selon la revendication 8, dans lequel le dispositif de commande est conçu en outre pour :
si la dérivée moyenne du différentiel de régulation de température n'a pas été négative pendant un temps écoulé supérieur à la troisième période de temps prédéfinie, déterminer si le différentiel de régulation de température est actuellement supérieur à zéro ; et
si le différentiel de régulation de température est actuellement supérieur à zéro, augmenter progressivement au premier mode à grande capacité, dans lequel le dispositif de commande est conçu en particulier pour :
si le différentiel de régulation de température n'est pas actuellement supérieur à zéro, déterminer si le différentiel de régulation de température a été inférieur à zéro pendant une quatrième période de temps prédéfinie ; et
si le différentiel de régulation de température a été inférieur à zéro pendant la quatrième période de temps prédéfinie, augmenter progressivement au deuxième mode à plus grande capacité en contournant le premier mode à grande capacité.

10. Procédé selon l'une quelconque des revendications 1 à 5 utilisé pour réguler le fonctionnement à faible capacité d'un système de compression de vapeur de réfrigérant transcritique (20) pour fournir de l'air conditionné à un espace régulé en température, le système de compression de vapeur de réfrigérant ayant un circuit d'écoulement de réfrigérant primaire incluant un compresseur (30) entraîné par un moteur à vitesse variable (32) entraîné par un entraînement à vitesse variable, un refroidisseur de gaz réfrigérant (40), un dispositif de détente haute pression (45), un ballon de détente (60), un dispositif de détente d'évaporateur (55), et un évaporateur (50) disposés dans un agencement d'écoulement de réfrigérant en série dans le circuit d'écoulement de réfrigérant primaire et un circuit de décharge de compresseur incluant une soupape de décharge pouvant être positionnée de manière sélective pour ouvrir ou fermer le circuit de décharge de compresseur, le procédé comprenant en outre :
l'ouverture de la soupape de décharge pour permettre au réfrigérant de passer du compresseur par le circuit de décharge de compresseur vers une partie de pression d'aspiration du circuit d'écoulement de réfrigérant primaire ;
l'ouverture de la soupape de détente haute pression vers une position complètement ouverte ;
le fonctionnement du moteur d'entraînement de compresseur à une fréquence pour entraîner le compresseur à une vitesse basse/minimale ; et
la régulation du fonctionnement d'au moins l'un d'un dispositif de déplacement d'air associé au refroidisseur de gaz ou d'un dispositif de chauffage associé à l'évaporateur pour chauffer un écoulement d'air aspiré dans l'espace régulé en température, dans lequel le fonctionnement d'au moins l'un d'un dispositif de déplacement d'air associé au refroidisseur de gaz ou d'un dispositif de chauffage associé à l'évaporateur pour chauffer un écoulement d'air aspiré dans l'espace régulé en température est en particulier régulé de manière à préserver la sensibilité de régulation de température de l'entraînement à vitesse variable entraînant le moteur à vitesse variable entraînant le compresseur.

11. Procédé selon la revendication 10, dans lequel la régulation du fonctionnement du dispositif de déplacement d'air associé au refroidisseur de gaz comprend le cyclage du dispositif de déplacement d'air du refroidisseur de gaz par le biais d'une pluralité de cycles de service d'activité/inactivité, dans lequel dans chaque cycle de service, le dispositif de déplacement d'air de refroidisseur de gaz est actif pendant une première période de temps et inactif pendant une deuxième période de temps, dans lequel en particulier la première période de temps est augmentée et la deuxième période de temps est augmentée lors de l'avancement d'un cycle de service à un cycle de service suivant lors du cyclage du dispositif de déplacement d'air par le biais d'une pluralité de cycles de service d'activité/inactivité.

12. Procédé selon la revendication 10, dans lequel la régulation du fonctionnement d'un dispositif de chauffage associé à l'évaporateur comprend le cyclage sélectif du dispositif de chauffage associé à l'évaporateur par le biais d'une pluralité de cycles de marche/repos pour chauffer de manière répétée l'écoulement d'air pendant une première période de temps et ne pas chauffer l'écoulement d'air pendant une seconde période de temps et/ou faire varier de manière sélective la quantité de courant électrique fournie à un élément chauffant électrique associé à l'évaporateur.
